Europäisches Patentamt

European Patent Office

Office européen des brevets

(19)

(11) Veröffentlichungsnummer: **0 199 069**

**A2**

## (12) EUROPÄISCHE PATENTANMELDUNG

(21) Anmeldenummer: **86103500.4**

(22) Anmeldetag: **14.03.86**

(51) Int. Cl.⁴: **F01M 11/10 , F16C 17/24 , F16N 29/00**

(30) Priorität: **22.03.85 DE 3510408**

(43) Veröffentlichungstag der Anmeldung:
**29.10.86 Patentblatt 86/44**

(84) Benannte Vertragsstaaten:
**AT CH DE FR GB LI**

(71) Anmelder: **Glyco-Metall-Werke Daelen & Loos GmbH**
**Stielstrasse 11**
**D-6200 Wiesbaden(DE)**

(72) Erfinder: **Grosskurth, Hans**
**Tulpenweg 19**
**D-6229 Walluf 1(DE)**

(54) **Einrichtung zum Überwachen des Betriebszustandes von Lagerungen.**

(57) Anordnung einer Einrichtung zum Überwachen des Betriebszustandes von Lagerungen, beispielsweise von in Kurbeltrieben angeordneten Gleitlagern in Maschinen, insbesondere Verbrennungskraftmaschinen mit einer Vielzahl von Lagerungen durch Feststellen des augenblicklichen Zustandes des Lagerschmierstoffes, wobei in unmittelbarer Nähe an jeder einzelnen zu überwachenden Lagerung, den baulichen Verhältnissen angepaßt, mindestens eine Auffangvorrichtung mit bekannten Meßgebern im Weg des aus dem Lager austretenden Schmierstoffes angebracht ist und diese Meßgeber an eine Auswerteinrichtung angeschlossen sind, in der die von den Meßgebern festgestellten Meßwerte für jede Lagerung getrennt speicherbar und/oder anzeigbar und/oder registrierbar sind, und die Auffangvorrichtung mit Meßgebern zum Feststellen der Temperatur des aus der jeweils überwachten Lagerung austretenden Schmierstoffes und mit Aufprallmeßgebern bzw. Flüssigkeitssensoren für den Schmierstoff versehen ist und mit diesen Aufprallmeßgebern bzw. Flüssigkeitssensoren direkt in den Spritzbereich des aus dem jeweiligen Lager ausspritzenden Schmierstoffes angebracht sind.

EP 0 199 069 A2

Einrichtung zum Überwachen des Betriebszustandes von Lagerungen

Die Erfindung betrifft eine Anordnung einer Einrichtung zum Überwachen des Betriebszustandes von Lagerungen, beispielsweise von in Kurbeltrieben angeordneten Gleitlagern in Maschinen, insbesondere Verbrennungskraftmaschinen, mit einer Vielzahl von Lagerungen durch Feststellen des augenblicklichen Zustandes des Lagerschmierstoffes.

Aus der DE-PS 19 04 879 ist eine Vorrichtung der eingangs genannten Art bekannt, bei welcher der Lagerschmierstoff in einer in die Schmierölleitung eingesetzte Kammer nach Metallteilchen detektiert wird, die infolge Lagerbeschädigung in den Schmierölstrom gelangt sind. In dieser Kammer sind zwei Reihen von kammartig ineinandergreifenden und auf unterschiedlichem elektrischen Potential liegenden Leiterstreifen vorgesehen, derart, daß quer zur Richtung des Schmierölstromes mehrere parallel mit Abstand hintereinander angeordnete Leiter entstehen. Diese Leiterplatten weisen eine Vielzahl von Öffnungen auf, durch die das Schmieröl durchtritt. Wenn nun vor dem Ausfallen eines Lagers oder Festfressen beispielsweise einer Kurbelstange bzw. eines Lagers Metallteilchen im Schmieröl auftreten, so kommt es zu einer Akkumulation solcher Teilchen von einer Öffnung einer Leiterplatte. Diese Ansammlung von Metallteilchen führt schließlich zum Überbrücken der Zwischenräume zwischen benachbarten, ineinandergreifenden, auf unterschiedlichem Potential liegendem Leiterstreifen, wodurch ein Alarmschaltkreis eingeschaltet wird, der ggf. ein Stillsetzen der Maschine bewirkt. Die Trimmung dieser aus DE-PS 19 04 879 bekannten Detektoreinrichtung, d.h. der Zeitpunkt der Alarmauslösung erfolgt durch Variation des Durchmessers der Öffnungen in der Leiterplatte oder durch Variation der Abstände zwischen den Leiterplatten.

Eine Vorrichtung ähnlicher Art ist aus der US-PS 2 252 222 bekannt, bei der im Gegensatz zu der Detektoreinrichtung nach der DE-PS 19 04 879 die elektrischen Leiter aus Stangen oder Stäben bestehen, die wechselweise auf unterschiedlichem Potential liegen. Hierbei erfolgt das Auslösen des Alarmsignals, wenn ein Metallteilchen einen elektrischen Kontakt zwischen zwei benachbarten Stäben herstellt.

Obgleich diese bekannten Einrichtungen eine gewisse Früherkennung sich anbahnender Lagerschäden erlauben, und insofern dem Wartungspersonal die Überwachung, beispielsweise von Großmotoren erleichtern, so sind diese bekannten Detektoreinrichtungen mit dem Nachteil behaftet, daß sie lediglich eine generelle Aussage über einen beginnenden Lagerschaden für alle infrage kommenden Lagerstellen eines Motors treffen können. Bei Stillsetzen eines Motors, Maschine, o.dgl. durch diese bekannten Einrichtungen ist es deshalb nach wie vor notwendig, daß sämtliche Lagerstellen vom Wartungspersonal inspiziert werden müssen, was aber je nach Art und Größe des Aggregats einen erheblichen Arbeitsaufwand bedeutet. Auch können diese bekannten Einrichtungen u.U. einen Falschalarm auslösen bzw. die Beschädigung eines Lagers vortäuschen, da die Meßgröße durch den integralen Wert der von allen Lagern in das Schmieröl abgegebenen Metallteilchen bestimmt ist, jedoch jedes Einzellager für sich noch über einen größeren Zeitraum funktionsfähig sein könnte. Wünschenswert wäre daher eine Einrichtung, die eine differenzielle Aussage über den Zustand jedes einzelnen Lagers treffen kann, was sich unter anderem auch in dem von den Versicherungsgesellschaften an derartigen Einrichtungen bekundeten Interesse äußert, da für mit solchartigen Früherkennungseinrichtungen versehenen Aggregate ein hoher Versicherungsrabatt gewährt werden soll.

Davon ausgehend ist es Aufgabe der Erfindung eine Einrichtung der eingangs beschriebenen Art derart weiterzuentwickeln, daß eine Früherkennung von sich anbahnenden Lagerschäden, wie Heißlaufen oder Festfressen für jedes Lager separat ermöglicht wird, wobei sich die Einrichtung durch einen einfachen, kompakten Aufbau, einfache Einbau-bzw. Anbaumöglichkeit und hohe Zuverlässigkeit auszeichnen soll.

Diese Aufgabe wird erfindungsgemäß dadurch gelöst, daß in unmittelbarer Nähe an jeder einzelnen zu überwachenden Lagerung, den baulichen Verhältnissen angepaßt, mindestens eine Auffangvorrichtung mit bekannten Meßgebern im Weg des aus dem Lager austretenden Schmierstoffes angebracht ist und diese Meßgeber an eine Auswerteinrichtung angeschlossen sind, in der die von den Meßgebern festgestellten Meßwerte für jede Lagerung getrennt speicherbar und/oder anzeigbar und/oder registrierbar sind.

Hierdurch wird eine gesonderte Überwachung jeder Lagerstelle erreicht, wodurch sich bei angezeigtem Lagerschaden eine Inspektion sämtlicher Lagerstellen, wie bei den bislang bekannten Einrichtungen erübrigt und lediglich das entsprechend angezeigte Lager ausgetauscht zu werden braucht. Das Überwachungs-und Früherkennungssystem gemäß der Erfindung führt aber nicht nur zu einer Verminderung des Arbeitsaufwandes bei der Inspektion eines nach einem angezeigten Lagerschaden stillgesetzten Aggregats. Durch die separate Überwachung jeder Lagerstelle mit an jeder einzelnen Lagerung, im Weg des aus dem Lager austretenden Schmierstoffes angebrachten Auffangvorrichtung werden Fehlalarme wie bei den bekannten über die Gesamtzahl der im Schmierstoff befindlichen Metallteilchen integrierenden Anzeigeeinrichtungen vermieden, wodurch eine unnötige zeitliche Bindung des Wartungspersonals entfällt. Dies wirkt sich nicht nur kostensenkend auf die Wartung aus, vielmehr hat die Einrichtung gemäß der Erfindung auch einen hohen Prämiennachlaß bei der Versicherung von derartigen Aggregaten gegen Stillstand und deren Folgekosten zur Folge.

Die Einrichtung gemäß der Erfindung eignet sich nicht nur zur Überwachung von Pleuellagerungen, beispielsweise bei Mittel-und Großmotoren, sondern auch bei allen in Kurbeltrieben angeordneten Lagern ebenso wie bei feststehenden Lagerungen.

Als Meßgeber können die im Handel erhältlichen kapazitiven, induktiven oder auf Widerstandsmessung beruhenden Meßsonden eingesetzt werden. Derartige Meßsonden zeichnen sich durch geringen Preis, hohe Zuverlässigkeit und geringen Raumbedarf aus, wodurch der Einbau insbesondere bei nachträglicher Umrüstung von bestehenden Aggregaten wesentlich erleichtert wird.

Selbstverständlich kann die Einrichtung gemäß der Erfindung an allen Motortypen, dh. Zylinderreihen-Anordnung, V-Anordnung usw. eingesetzt werden.

In einer Ausführungsform der Erfindung ist es vorgesehen, daß die Auffangvorrichtung zusätzlich mit Meßgebern zum Feststellen der Temperatur des aus der jeweils überwachten Lagerung austretenden Schmierstoffe vorgesehen ist. In dieser Ausführungsform mit zusätzlich zur Metallteilchenüberwachung vorgesehenen Temperaturkontrolle können auch die Störfälle des Heißlaufens eines Lagers erfaßt werden, wodurch ein besonders effektives Frühwarnsystem geschaffen wird. Als Temperaturmeßgeber können handelsübliche Meßsonden verwendet werden.

Nach einem weiteren Gedanken der Erfindung ist es vorgesehen, die Auffangvorrichtung mit Aufprallmeßgebern bzw. Flüssigkeitssensoren für den Schmierstoff zu versehen und mit diesen Aufprallmeßgebern bzw. Flüssigkeitssensoren direkt in den Spritzbereich des aus dem jeweiligen Lager ausspritzenden Schmierstoffes anzubringen. In dieser Ausführungsform wird in direkter Lage der Austrittsrichtung des Schmierstoffes an den beiden Lagerseiten der austretende Schmierstoff in Schmierstoffauffangbahnen, die in genau vorgeschriebenen Abstand beispielsweise zum Kurbelkreis angeordnet sind, aufgefangen, temperaturmäßig überwacht, auf Lagermetallteilchen kontrolliert, sowie festgestellt, ob überhaupt bzw. ob in ausreichendem Maße Schmierstoff vorhanden ist. Diese letztgenannte Maßnahme hat sich als besonders effektiv, hauptsächlich im Betriebsfall der Anlaßphase des Aggregats bewährt, insbesondere bei Aggregaten mit vorgeschaltetem hydrostatischen Schmierstoff-Drucksystem, als die erfindungsgemäßen Aufprallmeßgeber bzw. Flüssigkeitssensoren das Vorhandensein des Schmierstoffes in der kritischen Anlaßphase bzw. beim Stillsetzen des Aggregats indizieren. Sofern es sich um Motoren mit der Möglichkeit zur Umkehrung der Drehrichtung handelt, sind die Einrichtungen gemäß der Erfindung entsprechend konstruktiv auszulegen.

Weitere vorteilhafte Ausgestaltungen der Erfindung sind den übrigen Unteransprüchen entnehmbar.

Ein Ausführungsbeispiel der Erfindung wird nachfolgend näher erläutert.

Ausgehend von einem Großmotor, beispielsweise einem Schiffsmotor, ist an jedem Gleitlager des Kurbeltriebs in direkter Lage der Austrittsrichtung des Schmierstoffes aus dem jeweiligen Lager in Abstand zum Kurbelkreis jeweils eine separate Auffangvorrichtung mit Meßgebern angeordnet. Bei Großmotoren, wie in diesem Ausführungsbeispiel beschrieben, läßt sich die Auffangeinrichtung mit Meßgebern und ggf. Auswerteinrichtungen an der der Lagerung zugewandten Seite des Servicedeckels anbringen, was sich nicht nur vorteilhaft für den Einbau und Service auswirkt, sondern auch für die Nachrüstung von bereits in Betrieb befindlichen Motoren, ohne das es hierbei einer Änderung am Triebwerk, Kurbelstange oder Lager bedarf.

Die Meßgebereinrichtungen sind dazu ausgebildet, den vom Lager abspritzenden Schmierstoff temperaturmäßig zu überwachen und auf Metallteilchen hin zu detektieren. Die an den Meßgebern auftretenden Signale werden an eine Auswerteinrichtung weitergeleitet, die den Meßgebern direkt nachgeschaltet oder ggf. bei geringer Baugröße des Motors außerhalb des Aggregates angeordnet ist und mittels durch den Servicedeckel geführten Kabelverbindungen mit den Meßgebern verbunden ist.

Die Verarbeitung der von den Meßgebern kommenden Signale innerhalb der Auswerteinrichtung wird zweckmäßigerweise mittels einer computerisierten Schaltung erfolgen. Dabei wird das ankommende Signal digitalisiert und mit einem vorgegebenen Wert für die zulässige Betriebstemperatur des Schmierstoffes bzw. zu vertretenden Gehalts an Metallteilchen im Schmierstoff verglichen. Diese Werte werden über eine entsprechende Eingabemöglichkeit der digitalen Schaltungsanordnung vorher einprogrammiert. Liegt nun beispielsweise der gemessene Gehalt an Metallteilchen im Schmierstoff oberhalb eines ersten Schwellenwertes, so spricht ein Schalter zum Betätigen eines optischen und/oder akkustischen Alarmgebers an. Hierdurch erhält das Überwachungspersonal die Mitteilung, daß das entsprechende Lager zwar noch funktionstüchtig, jedoch eventuell bei der nächsten Gesamtwartung der Maschine inspiziert bzw. ausgetauscht werden sollte. Überschreitet jedoch der gemessene Wert infolge höherer Temperatur des Schmierstoffes oder größeren Gehaltes an Metallteilchen einen zweiten vorgegebenen Schwellenwert für Temperatur oder Gehalt an Metallteilchen des Schmierstoffes, so erhält die der Auswerteinrichtung nachgeschaltete Steuereinrichtung beispielsweise über einen zwischengeschalteten Digital-Analogwandler den Befehl zum Stillsetzen der Maschine. Bei richtiger Vorgabe des obersten Schwellenwertes liegt aber der Zeitpunkt des Abschaltens vor einem sich anbahnenden Lagerversagen bzw. Heißlaufen oder Festfressen, so daß in jedem Fall die Kurbelwelle als vergleichsweise wertvollstes Bauteil unbeschädigt bleibt.

Selbstverständlich ist es möglich anstelle der der Anzahl der Lager entsprechenden Auswerteinrichtungen lediglich eine zentrale Auswerteinrichtung vorzusehen. Die Abfrage der Meßinformationen an den den einzelnen Lagern zugeordneten Meßgebern kann dann taktweise über einen Wahlschalter erfolgen. Sowohl bei Einzel-als auch bei Gesamtmeßwerterfassung wird sich ein Mikroprozessor bzw. -prozessoren als Auswerteinrichtung empfehlen, der in einfacher Weise die Funktionen des Speicherns und Registrierens aller von jedem Meßgeber herkommenden Meßwerte zusammen mit der Identifikation des jeweiligen Meßgebers in sich vereint und gleichzeitig den Steuerbefehl für die Steuerungseinrichtungen zum Stillsetzen der Maschine und zum Betätigen der jedem Lager zugeordneten optischen und akkustischen Alarmgebern erteilt.

Weiterhin ist es möglich, die Auswerteinrichtung mit zugeordneter Speichereinheit in Form eines Fahrt-oder Flugschreibers zu kapseln bzw. zu plombieren, so daß alle Meßinformationen und ausgewerteten Daten dokumentiert erhalten bleiben, um bei eingetretenem Versicherungsfall eine objektive Überprüfung seitens Dritter durchführen zu können.

**Ansprüche**

1) Anordnung einer Einrichtung zum Überwachen des Betreiebszustandes von Lagerungen, beispielsweise von in Kurbeltrieben angeordneten Gleitlagern in Maschinen, insbesondere Verbrennungskraftmaschinen mit einer Vielzahl von Lagerungen durch Feststellen des augenblicklichen Zustandes des Lagerschmierstoffes, dadurch gekennzeichnet, daß in unmittelbarer Nähe an jeder einzelnen zu überwachenden Lagerung, den baulichen Verhältnissen angepaßt, mindestens eine Auffangvorrichtung mit bekannten Meßgebern im Weg des aus dem Lager austretenden Schmierstoffes angebracht ist und diese Meßgeber an eine Auswerteinrichtung angeschlossen sind, in der die von den Meßgebern festgestellten Meßwerte für jede Lagerung getrennt speicherbar und/oder anzeigbar und/oder registrierbar sind.

2) Einrichtung nach Anspruch 1, dadurch gekennzeichnet, daß die Auffangvorrichtung mit Meßgebern zum Feststellen der Temperatur des aus der jeweils überwachten Lagerung austretenden Schmierstoffes versehen ist.

3) Einrichtung nach Anspruch 1 oder 2, dadurch gekennzeichnet, daß die Auffangvorrichtung mit Aufprallmeßgebern bzw. Flüssigkeitssensoren für den Schmierstoff versehen und mit diesen Aufprallmeßgebern bzw. Flüssigkeitssensoren direkt in den Spritzbereich des aus dem jeweiligen Lager ausspritzenden Schmierstoffes angebracht sind.

4) Einrichtung nach einem der Ansprüche 1 bis 3, dadurch gekennzeichnet, daß die Auswerteinrichtung Schaltungsanordnungen zum selbsttätigen Feststellen von außerhalb eines vorgegebenen Bereichs liegenden Meßwerten eines oder mehrerer Meßgeber und Einrichtungen zum Anzeigen und/oder Speichern bzw. Registrieren der Identifikation des jeweiligen Meßgebers bzw. der jeweiligen Meßgeber sowie an diese Schaltungsanordnungen angeschlossene Steuereinrichtungen zum Stillsetzen der Maschine bei Auftreten von außerhalb eines vorgegebenen Bereichs liegenden Meßwerten aufweist.

5) Einrichtung nach Anspruch 4, dadurch gekennzeichnet, daß die Steuereinrichtungen zum Stillsetzen der Maschine dazu ausgebildet sind, erst anzusprechen, wenn von demselben Meßgeber kommende Meßwerte wiederholt oder über einen vorher festgelegten Zeitraum außerhalb eines vorher festgelegten Bereiches liegen.

6) Einrichtung nach Anspruch 4 oder 5, dadurch gekennzeichnet, daß die Auswerteinrichtung zusätzlich zu oder anstatt der Steuerungseinrichtungen zum Stillsetzen der Maschine mit bei Auftreten von außerhalb eines vorgegebenen Bereiches liegenden Meßwerten eines oder mhrerer Meßgeber ansprechende Schalter zum Betätigen von Alarmgebern aufweist.

7) Einrichtung nach einem der Ansprüche 1 bis 6, dadurch gekennzeichnet, daß die Auswerteinrichtung Einrichtungsteile zum Feststellen und/oder Anzeigen und/oder Speichern und/oder Registrieren aller von jedem Meßgeber kommenden Meßwerte zusammen mit der Identifikation des jeweiligen Meßgebers aufweist.

8) Einrichtung nach Anspruch 7, dadurch gekennzeichnet, daß die Einrichtungsteile zum Feststellen und/oder Anzeigen und/oder Speichern und/oder Registrieren aller Meßwerte über Wahlschalter an jeden der Meßgeber einzeln anschließbar sind.

9) Einrichtung nach Anspruch 1 bis 8, dadurch gekennzeichnet, daß an jeder Lagerung ein Meßgeber zum Messen der Temperatur des aus dem jeweiligen Lager austretenden Schmierstoffes und ein Meßgeber zum Feststellen des Gehaltes von Metallteilchen in dem aus dem jeweiligen Lager austretenden Schmiermittel angeordnet sind oder ein kombinierter Meßgeber für Temperatur und Gehalt an Metallteilchen des Schmierstoffes angeordnet ist.

10) Einrichtung nach einem der vorhergehenden Ansprüche, dadurch gekennzeichnet, daß bei Großraummotoren die Auffangvorrichtung und ggf. die Auswerteinrichtung an der der Lagerung zugewandten Seite des Servicedeckels des Motors angebracht ist.